# EUROPEAN PATENT APPLICATION

(11) **EP 4 372 559 A1**
(43) Date of publication of application: **22.05.2024**
(21) Application number: 22207378.5
(22) Date of filing: 15.11.2022
(51) Int. Cl.: G06F 9/50, G06F 9/54

(54) **A DISTRIBUTED CONTROL SYSTEM FOR INDUSTRIAL PROCESSES, A METHOD THEREIN, COMPUTER PROGRAM AND COMPUTER PROGRAM PRODUCT**

(71) Applicant: ABB SCHWEIZ AG, 5400 Baden (CH)
(72) Inventor: GJERSETH, Jan, 725 91 Västerås (SE); THILDERKVIST, Hans, 214 37 Malmö (SE); JETLEY, Raoul, 560048 Bangalore (IN); KOZIOLEK, Heiko, 76227 Karlsruhe (DE); KARLEKAR, Sunil, 560048 Bangalore (IN)
(74) Representative: Kransell & Wennborg KB

(57) **Abstract**

A distributed control system and a corresponding method for industrial processes are provided. The distributed control system comprises one or more runtime services spanning over a server- and control layer. Each runtime service is arranged to manage its own configuration data, and each configuration item of the runtime service is provided with an identifier that is unique within the distributed control system, wherein each such unique identifier is associated with a physical host address corresponding to an endpoint of the respective runtime service and stored as an attribute of its configuration item.

## Description

### TECHNICAL FIELD

The technology disclosed herein relates generally to the field of distributed control systems, and in particular to means and methods for managing configuration data in a distributed control system.

### BACKGROUND

Distributed process control systems used in industrial automation have serviceoriented software architectures, where many loosely coupled services support human operators in supervising and controlling production plants. Each service needs a configuration, which is stored in an address space. Each configuration item of the configuration is individually accessible. Having a central, monolithic configuration data management ("Shared Database") is undesired since such management tightly couples the services and also constitutes a single-point-of-failure, wherein all services and clients would be affected in case of failures.

On the other hand, having an uncoordinated, de-centralized configuration data management per service ("Database-per-service") is also undesired since it would require many configuration item address translations between services. Such address translations are costly to implement, execute, and maintain. Furthermore, it may lead to namespace address conflicts, where configuration items are no longer uniquely identifiable in the system, and thereby affecting the intended functionality.

From the above, it is realized that there is a need for improvements in view of management of configuration data in distributed control systems. There is a need to avoid single-point-of-failures, while also avoiding excessive amount of address translations.

### SUMMARY

An objective of embodiments herein is to address and improve various aspects for service configuration management. A specific objective is to provide a method and also means for managing service configurations across many services and clients in these type of systems without breaking a design principle of loose coupling. Such loose coupling is desirable in that it allows improved service maintenance, independent development, and faster performance of services.

The above objectives, and others, are achieved by the methods, devices, computer programs and computer program products according to the appended independent claims, and by the embodiments according to the dependent claims.

These objectives and others are accomplished by a distributed control system for industrial processes, a corresponding method, computer program and computer program product.

According to a first aspect there is presented a distributed control system for industrial processes. The distributed control system comprises one or more runtime services that span over a server- and control layer. In the distributed control system, each runtime service is arranged to manage its own configuration data. Further, each configuration item of the runtime service is provided with an identifier that is unique within the distributed control system. Each such unique identifier is associated with a physical host address corresponding to an endpoint of the respective runtime service and stored as an attribute of its configuration item.

The herein disclosed distributed control system for industrial processes provides a number of advantages. For instance, the system preserves loose coupling of services, which cannot alter the configuration items of other services since they are stored and protected by their respective managing services. This allows, in an exemplary scenario, separate teams to work on the services in isolation without requiring communicating with other teams. Another advantage is that there is no need for inefficient and possibly error-prone address translations. Still another advantage is that the system's configuration is not stored at a central location, whereby a single point-of-failure is avoided.

In an aspect related to the above, the unique identifier comprises a concatenation of two or more of: a Global Unique Identifier, GUID, for the object; a GUID for the model; and Open Platform Communications Unified Architecture, OPC UA, node path for the configuration item.

According to a second aspect there is presented a method in a Service Dispatcher component of a distributed control system for providing a data look-up to a runtime service of the distributed control system. The method comprises receiving, from the runtime service, a unique identifier of a configuration item of the runtime service; obtaining, based on the unique identifier, a corresponding service host address from a mapping table, by accessing the mapping table, in which a unique identifier of a configuration item of the runtime service maps to a corresponding service host address, to obtain the service host address; and providing, to the runtime service, the service host address.

According to a third aspect there is presented a computer program for a distributed control system for industrial processes. The computer program comprises computer code which, when run on processing circuitry of a device, causes the device to perform a method according to the second aspect.

According to a fourth aspect there is presented a computer program product comprising a computer program according to the third aspect, and a computer readable storage medium on which the computer program is stored.

The second, third and fourth aspect provide advantages corresponding to those mentioned in relation to the first aspect.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, action, etc." are to be interpreted openly as referring to at least one instance of the element, apparatus, component, means, module, action, etc., unless explicitly stated otherwise. The actions of any method disclosed herein do not have to be performed in the exact order disclosed, unless explicitly stated.

### BRIEF DESCRIPTION OF THE DRAWINGS

The inventive concept is now described, by way of example, with reference to the accompanying drawings, in which:
Figure 1 is a schematic diagram illustrating a process control system and interactions therein according to embodiments;
Figure 2 illustrates aspects of a common, virtual address space or namespace according to embodiments;
Figure 3 illustrates an exemplary use case according to embodiments;
Figure 4 illustrates aspects of downloading data to runtime according to embodiments;
Figure 5 illustrates a service dispatcher function according to embodiments;
Figure 6 is a flowchart of various embodiments of a method in a process control system;
Figure 7 is a schematic diagram showing functional units of a device according to an embodiment;
Figure 8 is a schematic diagram showing functional modules of a device according to an embodiment; and
Figure 9 shows one example of a computer program product comprising computer readable means according to an embodiment.

### DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any action or feature illustrated by dashed lines should be regarded as optional.

It is difficult to manage configuration data in a distributed control system composed of many microservices. One difficulty lies in that the microservices should be loosely coupled while namespace conflicts and inefficient address translations should still be avoided. Microservices may be defined as an architectural and organizational approach to software development wherein the software is composed of small independent services communicating over well-defined Application Programming Interfaces (APIs). These microservices are typically owned by small, self-contained teams.

Briefly, the herein disclosed invention provides, in various embodiments, a virtual common namespace for configuration items of multiple runtime services in a distributed process control system. Each service manages its own configuration data, but an engineering system has assigned a unique identifier to each configuration item. The unique identifier allows runtime clients to look-up the host address of the runtime service that manages the configuration item dynamically at runtime. An advantage of this approach is that the runtime services remain loosely coupled and that namespace conflicts and address translations can still be avoided.

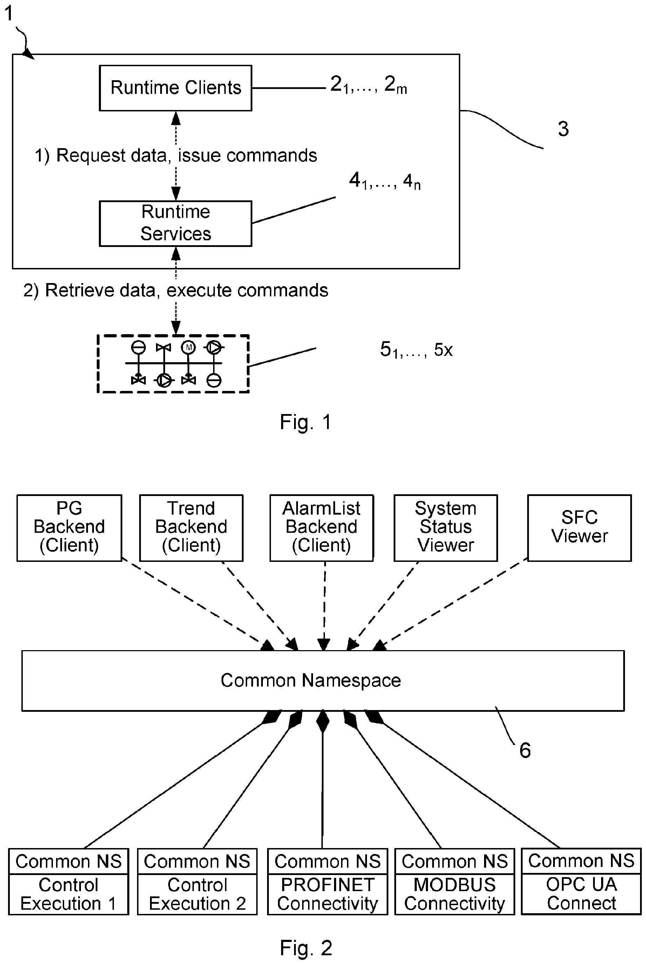

**Fig. 1** is a schematic diagram illustrating a distributed process control system 1 and interactions therein according to embodiments. The distributed process control system 1 may be used for controlling and supervising industrial processes, such as, for instance, power production or chemical processes. In the distributed process control system 1 numerous Runtime Clients 2₁,..., 2ₘ are used by human operators for supervising the industrial processes, e.g., by means of process graphics, trend charts and alarm management, to mention a few examples. The Runtime Client 2₁,..., 2ₘ is a software application allowing the operator to access a service from a server and is typically hosted on a personal computer 3.

The Runtime Clients 2₁,..., 2ₘ interact with numerous Runtime Services 4₁,..., 4ₙ, which manage the runtime and configuration data of, for instance, automation equipment 5₁,..., 5ₓ used in the industrial processes. Examples of such automation equipment 5₁,..., 5ₓ comprise sensors for flow, temperature, level and pressure, and actuators such as pumps, motors, turbines and valves, all providing sensor data. The Runtime Services 4₁,..., 4ₙ may, for instance, comprise graphics backend, historian server, alarm engine to mention a few examples.

The runtime clients 2₁,..., 2ₘ are typically Open Platform Communications Unified Architecture (OPC UA) runtime clients, while runtime services 4₁,..., 4ₙ are typically OPC UA servers, which means that they expose their runtime and configuration data in a so-called address space that can be accessed by the runtime clients via a network interface. The present invention provides, in various embodiments, a common namespace, which is a mechanism to assign unique identifiers to configuration items in the distributed process control system 1. This mechanism may be implemented in a node and service manager; the common namespace may for instance be implemented in controllers and is extended to distributed runtime services spanning over server and controller-layer and may be seen as a "network-centric architecture". Each individual service is aware of the identifiers and a service dispatcher may be used for looking up corresponding endpoint at runtime. The provided configuration data lookup is a fast mechanism for resolving identifiers of network endpoints by using a buffered, in-process mapping table in the Service Dispatcher. The features of common namespace and rapid configuration data lookup will be described more in detail in the following.

Figure 1 also illustrates the above indicated interactions between runtime clients 2₁,..., 2ₘ, runtime services 4₁,..., 4ₙ and automation equipment used in the industrial processes. The runtime clients 2₁,..., 2ₘ may, for instance, request data from the runtime services 4₁,..., 4ₙ, which in turn retrieve the requested data from the corresponding automation equipment 5₁,..., 5ₓ. The runtime services 4₁,..., 4ₙ then provide the requested data to the runtime clients 2₁,..., 2ₘ, which may then use the data, for instance, for providing process graphics, trend charts and alarm management. Another example on an interaction is also indicated in the figure 1: the runtime clients 2₁,..., 2ₘ may issue a command to the runtime service 4₁,..., 4ₙ, which in turn executes the command for the relevant automation equipment 5₁,..., 5ₓ. For instance, a runtime client 2₁,..., 2ₘ may issue a command that a particular valve should be opened, and the runtime-service 4₁,..., 4ₙ then executes the command.

**Fig. 2** illustrates aspects of a common virtual address space or name space according to embodiments. In various embodiments of the present invention, the common, virtual address space, hereinafter denoted common namespace 6, is used among all runtime services 4₁,...,4ₙ in the distributed process control system 1. This common namespace 6 is provided, at least, to avoid namespace conflicts and to tolerate individually failing runtime services 4₁,..., 4ₙ.

During an engineering phase of the distributed process control system 1 a consolidated engineering namespace 10 maybe selected for a project, for instance, the project of automating a specific plant. The namespace 6 comprises objects (e.g., a temperature transmitter), models (e.g., an Asset Monitor), and structures to store configuration items (e.g., an asset status). The Engineering Platform assigns unique identifiers to each configuration items. In exemplary embodiments, the Engineering Platform concatenates the following three elements to create such unique identifier:
- a Global Unique Identifier (GUID) for the object
- a GUID for the model
- an OPC UA node path for the configuration item

The unique identifiers may be stored as attributes of the configuration items and are usually not directly visible for the automation engineer since they are intended for machine-to-machine communication.

Table 1 and Table 2 below are examples on a Service Dispatcher Mapping Table. Table 1 is a table of identifiers, wherein the Key is an identifier, and the Value is a particular service. Table 2 is a table of exemplary services, wherein the Key is the value of the service found in of table 1, and the corresponding Value is the sought endpoint on the network, e.g., a server endpoint.

**Table 1 illustrating identifiers and host services**

| **Identifier (ObjectID + ModelID)** | **Host Service** |
|---|---|
| ID(TT55) + ID(AssetMonitor) | AssetMonitorService1 |
| ID(TT₅₅) + ID(UADevice) | UAConnectService1 |
| ID(TT56) + ID(AssetMonitor) | AssetM oni torService1 |
| ID(TT56) + ID(UADevice) | UAConnectService1 |
| ID(TT100) + ID(AssetMonitor) | AssetM oni torService1 |
| ID(TT56) + ID(UADevice) | UAConnectService1 |
| ID(Motor1) + ID(FunctionBlock) | ControlExecService1 |

**Table 2 illustrating services and server endpoints**

| **Services** | **Server Endpoint** |
|---|---|
| AssetMonitorService1 | 172.17.12.13:48020 |
| AssetMonitorService2 | 172.17.13.10:48020 |
| UAConnectService1 | 10.12.43.32:48011 |
| UAConnectService2 | 10.12.43.32:48011 |
| ControlExecService1 | 172.17.12.13:48020 |

Table 1 and Table 2 are linked according to: Table 1 comprises identifiers, wherein the leftmost column gives a key (ObjectID and ModelID) and the rightmost column gives a corresponding value (= Service). Correspondingly, Table 2 comprises Services in the leftmost column and Server Endpoint in the rightmost column. For instance, having a key (e.g., ID(TT₅₅) + ID(AssetMonitor)) and Value (AssetMonitorService1) from Table 1 then Table 2 gives the corresponding Server endpoint (172.17.12.13:48020) in the network.

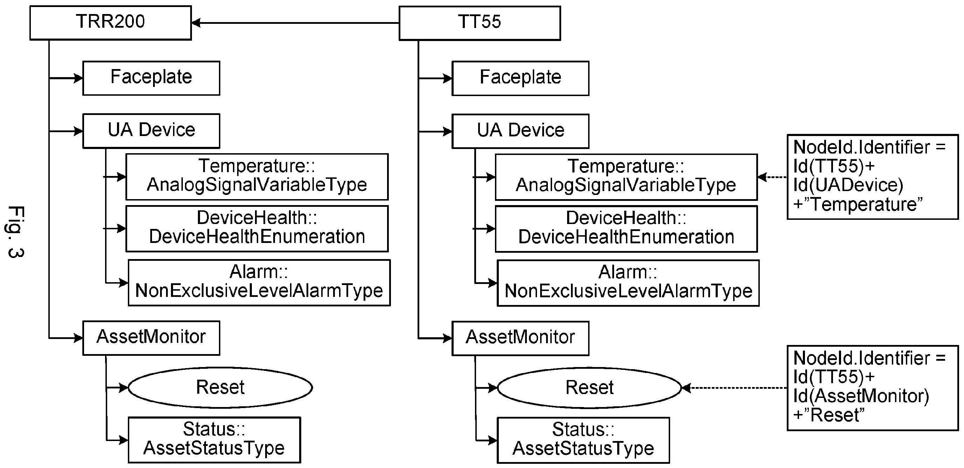

**Fig. 3** illustrates an exemplary use case according to embodiments. As a particular example, a temperature transmitter is designated "TT55" and derives from an abstract type "TTR200". The unique identifier for the temperature transmitter's analog signal corresponding to the measure temperature would then be GUID(TT55) + GUID(UADevice)+Temperature, or, in verbose notation: 7ced3b09-18b4-4625-a3ad-97e23adco6ad/49352673-5538-451b-b77f-cd708c69a408/Temperature.

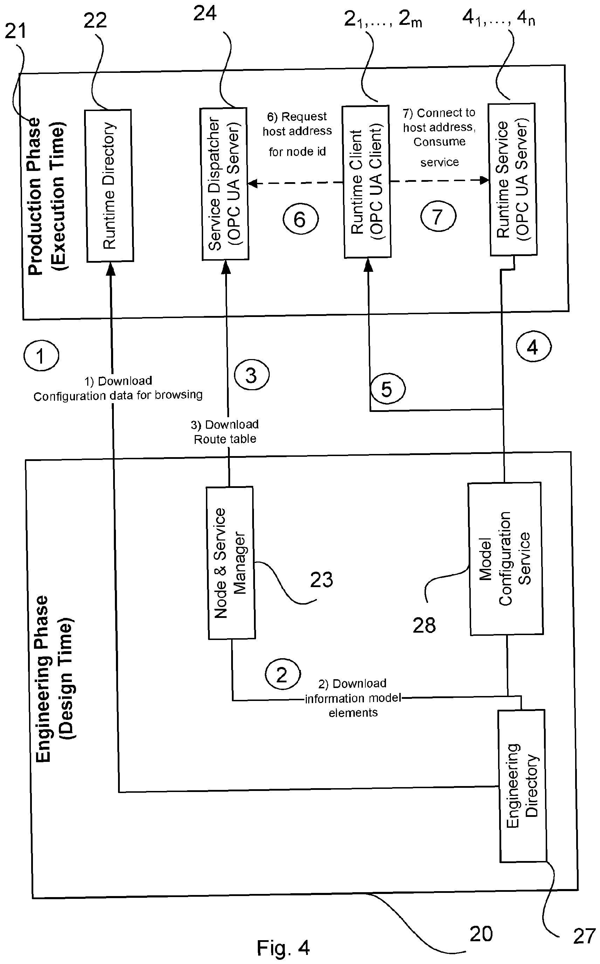

**Fig. 4** illustrates aspects of downloading engineering data to runtime according to embodiments. At the left-hand side, box 20 illustrates an engineering platform 20 used during the engineering phase, and at the right-hand side, box 21 illustrates a runtime client during the production phase. After the engineering phase is completed, an engineering platform 20 downloads the configuration items with their node identifier from an engineering directory 27 to a runtime directory 22 for browsing and querying (indicated at encircled number 1). Furthermore, the engineering platform 20 downloads (indicated at encircled number 2) configuration data, e.g., information model elements, to a node and service manager 23. The node and service manager 23 in turn maps the node identifiers to specific host addresses, as described earlier with reference to Table 1 and Table 2. Thereafter the node and service manager 23 downloads (indicated at encircled number 3) a routing table of node identities giving host addresses to a runtime component denoted Service Dispatcher 24, which may itself be an OPC UA server. For a typical production plant with 1000 to 10000 devices, the size of such a routing table is expected to comprise data in the range of 0.1 to 1 Mbyte of data.

After completing the engineering phase, a model configuration service 28 of the engineering platform 20 downloads (indicated at encircled number 4) the configuration data, including the generated node identifiers, to the respective runtime services 4₁,..., 4ₙ. For example, a Process Graphics configuration service might typically download graphic files and OPC UA subscription data for a process graphics to the graphics backend service, or a control configuration service might download a control program in IEC 61131-3 to a runtime control service that can execute such programs.

The Model Configuration Service then also feeds all Runtime Clients with their required node identifiers (indicated at encircled number 5). During the production phase, once the clients and service have been started up, the Runtime Clients 2₁,..., 2ₘ are now able to query (indicated at encircled number 6) the Service Dispatcher 24 for the current host address of each configuration item based on the downloaded node identifications. A Runtime Client can then use the retrieved host address to connect (indicated at encircled number 7) to the runtime service and perform its functionality.

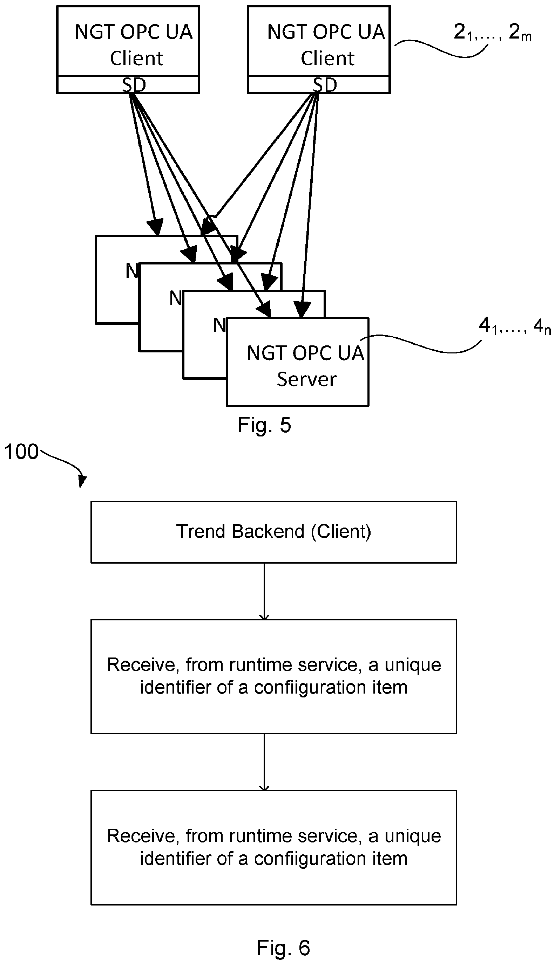

**Fig. 5** illustrates a service dispatcher function according to embodiments, and in particular a service dispatcher 24 as an in-process component. In order to avoid latency introduced by inter-service communication, the Service Dispatcher functionality may thus, in various embodiments, be integrated directly into a runtime client 2₁,..., 2ₘ as an in-process component. In such case, a runtime client 2₁,..., 2ₘ manages a copy of the entire mapping table with node identifiers and host addresses. However, since the in-process service dispatcher can lead to a high number of OPC UA connections and sessions, causing memory and processing overhead, aggregating OPC UA servers can be used as mediators for objects or models typically used by the same clients.

The herein described Node-and-Service Manager 23 maps identifiers to actual service host addresses and creates a mapping table containing ID and IP addresses. The mapping table can have more than 10.000 entries in large process plant, expected to require 100-1000 Kbyte of data. The Node-and-Service Manager 23 downloads the table to the Service Dispatcher 24, which is a runtime component to be used for looking up host endpoints during runtime. Clients query the Service Dispatcher 24 with their required configuration identifiers which they receive from the Engineering system, gest back a host address, and then directly connects to the host address in order to query the respective configuration item. To avoid inefficient inter-service calls between client and the Service Dispatcher 24 service, the Service Dispatcher may alternatively be realized as an in-process component and then be included directly into any runtime client.

According to aspects of the invention, and as has been described, each Runtime Service in a system is to manage its own configuration data (e.g., in an OPC UA server or similar). Each configuration data item is identified by a system-wide unique identifier (e.g., a GUID), predetermined in an Engineering Directory. The generation of identifiers is performed before downloading configuration data from the engineering system to the runtime services and clients. The identifier itself may be a concatenation of the respective objects GUID (e.g., sensor id), model GUID (e.g., asset monitor) and the path in the address space (e.g., OPC UA browse path). The system-wide set of unique identifiers is called a Common Namespace across all Runtime Services.

A distributed control system 1 for industrial processes is provided, as shown e.g., in figure 1. The distributed control system 1 enables, for instance, a human operator to control, supervise and/or monitor various industrial processes of a plant.

The distributed control system 1 comprises one or more runtime services 4₁,..., 4ₙ spanning over a server- and control layer. In the control system 1, each runtime service 4₁,..., 4ₙ is arranged to manage its own configuration data. Further, each configuration item of the runtime service 4₁,..., 4ₙ is provided with an identifier that is unique within the distributed control system 1. Each such unique identifier is associated with a physical host address corresponding to an endpoint of the respective runtime service 4₁,..., 4ₙ and stored as an attribute of its configuration item.

A number of advantages are provided by the herein disclosed distributed control system 1. For instance, an easier engineering phase is provided owing to the fact that namespace conflicts are efficiently avoided. Further, a higher system availability is enabled, as runtime services may fail individually, and would not, as in prior art, affect all services and clients. Still further, security is increased while errors are avoided. These advantages may be obtained by forcing all configuration data through the engineering system, which may allow consistency checks and security checks, to mention a few examples. Yet further, a low CPU/network overhead is enabled, since identifier translations and network lookups can be avoided.

In an embodiment, the unique identifier comprises a concatenation of two or more of: a Global Unique Identifier, GUID, for the object; a GUID for the model; and Open Platform Communications Unified Architecture, OPC UA, node path for the configuration item.

In some embodiments, the distributed control system 1 comprises runtime clients 2₁,..., 2ₘ for human supervision of industrial processes. In some of these embodiments, the runtime clients 2₁,..., 2ₘ comprises one or more of: process graphics, trend charts and alarm management.

Fig. 6 is a flowchart of various embodiments of a method in a process control system. The method 100 may be executed in a Service Dispatcher component 24, 34 of a distributed control system 1, described earlier. The method 100 is useful for providing a data look-up to a runtime service 4₁,..., 4ₙ of the distributed control system 1. The service dispatcher component 24 is, in various embodiments, an Open Platform Communications Unified Architecture, OPC UA, server.

The method 100 comprises receiving 102, from the runtime service 4₁,..., 4ₙ, a unique identifier of a configuration item of the runtime service 4₁,..., 4ₙ.

The method 100 comprises obtaining 103, based on the received unique identifier, a corresponding service host address from a mapping table, by accessing the mapping table. In the mapping table, a unique identifier of a configuration item of the runtime service 4₁,..., 4ₙ maps to a corresponding service host address, to obtain the service host address.

The method 100 comprises providing 104, to the runtime service 4₁,..., 4ₙ, the service host address.

In an embodiment, the method 100 comprises updating the mapping of the unique identifier to a service endpoint when configuration items within a service is moved to another service.

In some embodiments, the component is an in-process component 34 in a runtime client 2₁,..., 2ₘ. In such embodiments, the runtime service 4₁,..., 4ₙ is provided with an in-process data look-up.

In various embodiments, the component comprises an in-process component 34 in a runtime client 2₁,..., 2ₘ.

In various embodiments, each configuration item of the runtime service 4₁,..., 4ₙ is provided with a unique identifier associated with a host address corresponding to an endpoint of the respective runtime service 4₁,..., 4ₙ.

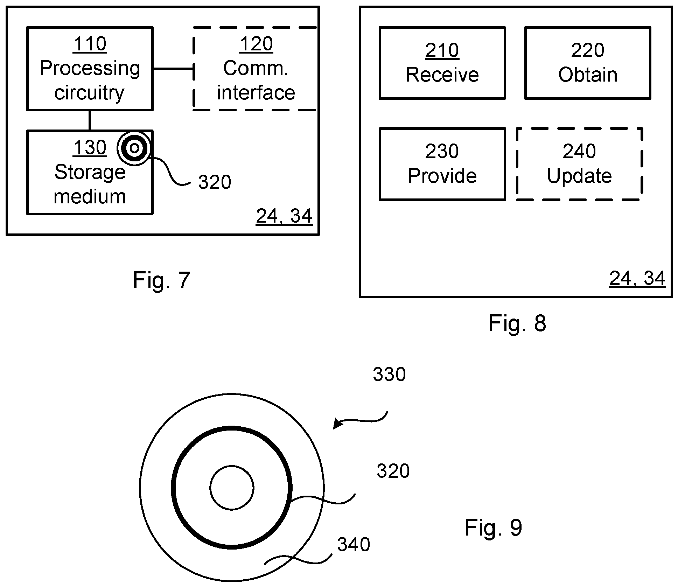

Fig. 7 schematically illustrates, in terms of a number of functional units, the components of a Service Dispatcher component 24, 34 of a distributed control system 1 according to an embodiment. Processing circuitry 110 is provided using any combination of one or more of a suitable central processing unit (CPU), multiprocessor, microcontroller, digital signal processor (DSP), etc., capable of executing software instructions stored in a computer program product 330 (as in Fig. 11), e.g., in the form of a storage medium 130. The processing circuitry 110 may further be provided as at least one application specific integrated circuit (ASIC), or field programmable gate array (FPGA).

Particularly, the processing circuitry 110 is configured to cause the Service Dispatcher component 24, 34 to perform a set of operations, or actions, as disclosed above. For example, the storage medium 130 may store the set of operations, and the processing circuitry 110 may be configured to retrieve the set of operations from the storage medium 130 to cause the Service Dispatcher component 24, 34 to perform the set of operations. The set of operations may be provided as a set of executable instructions. The processing circuitry 110 is thereby arranged to execute methods as herein disclosed.

The storage medium 130 may also comprise persistent storage, which, for example, can be any single one or combination of magnetic memory, optical memory, solid state memory or even remotely mounted memory.

The Service Dispatcher component 24, 34 may further comprise a communications interface 120 for communications with other entities, functions, nodes, and devices, over suitable interfaces. As such the communications interface 120 may comprise one or more transmitters and receivers, comprising analogue and digital components.

The processing circuitry 110 controls the general operation of the Service Dispatcher component 24, 34 e.g., by sending data and control signals to the communications interface 120 and the storage medium 130, by receiving data and reports from the communications interface 120, and by retrieving data and instructions from the storage medium 130. Other components, as well as the related functionality, of the Service Dispatcher component 24, 34 are omitted in order not to obscure the concepts presented herein.

Fig. 8 schematically illustrates, in terms of a number of functional modules, the components of a Service Dispatcher component 24, 34 according to an embodiment. The Service Dispatcher component 24, 34 of Fig. 8 comprises a number of functional modules; a receive module 210 configured to receive a unique identifier of a configuration item of a runtime service 4₁,..., 4ₙ, an obtain module 220 configured to obtain, based on the received unique identifier, a corresponding service host address from a mapping table, and a provide module 230 configured to obtain a service host address from a mapping table. The Service Dispatcher component 24, 34 of Fig. 10 may further comprise a number of optional functional modules, such as, for instance, an update module 240 configured to update the mapping of the unique identifier to a service endpoint when configuration items within a service is moved to another service. In general terms, each functional module 210, 220, 230, 240 may be implemented in hardware or in software. Preferably, one or more or all functional modules 210, 220, 230, 240 may be implemented by the processing circuitry 110, possibly in cooperation with the communications interface 120 and the storage medium 130. The processing circuitry 110 may thus be arranged to fetch instructions from the storage medium 130 as provided by a functional module 210, 220, 230, 240 and to execute these instructions, thereby performing any actions of the Service Dispatcher component 24, 34 as disclosed herein.

Fig. 9 shows one example of a computer program product comprising computer readable means 340 according to an embodiment. On this computer readable means 340, a computer program 320 can be stored, which computer program 320 can cause the processing circuitry 110 and thereto operatively coupled entities and devices, such as the communications interface 120 and the storage medium 130, to execute methods according to embodiments described herein. The computer program 320 and/or computer program product 330 may thus provide means for performing any actions of the Service Dispatcher component 24, 34 as herein disclosed.

In the example of Fig. 10, the computer program product 330 is illustrated as an optical disc, such as a CD (compact disc) or a DVD (digital versatile disc) or a Blu-Ray disc. The computer program product 330 could also be embodied as a memory, such as a random-access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 320 is here schematically shown as a track on the depicted optical disk, the computer program 320 can be stored in any way which is suitable for the computer program product 330.

The inventive concept has mainly been described above with reference to a few embodiments. However, as is readily appreciated by a person skilled in the art, other embodiments than the ones disclosed above are equally possible within the scope of the inventive concept, as defined by the appended patent claims.

## Claims

1. A distributed control system (1) for industrial processes, the distributed control system (1) comprising one or more runtime services (4₁,..., 4ₙ) spanning over a server- and control layer, wherein:
- each runtime service (4₁,..., 4ₙ) is arranged to manage its own configuration data, and
- each configuration item of the runtime service (4₁,..., 4ₙ) is provided with an identifier that is unique within the distributed control system (1), wherein each such unique identifier is associated with a physical host address corresponding to an endpoint of the respective runtime service (4₁,..., 4ₙ) and stored as an attribute of its configuration item.

2. The distributed control system (1) as claimed in claim 1, wherein the unique identifier comprises a concatenation of two or more of: a Global Unique Identifier, GUID, for the object; a GUID for the model; and Open Platform Communications Unified Architecture, OPC UA, node path for the configuration item.

3. The distributed control system (1) as claimed in claim 1 or 2, comprising runtime clients (2₁,..., 2ₘ) for human supervision of industrial processes.

4. The distributed control system (1) as claimed in claim 3, wherein the runtime clients (2₁,..., 2ₘ) for human supervision of industrial processes comprises one or more of: process graphics, trend charts and alarm management.

5. A method (100) in a Service Dispatcher component (24, 34) of a distributed control system (1) for providing a data look-up to a runtime service (4₁,..., 4ₙ) of the distributed control system (1), the method (100) comprising:
- receiving (102), from the runtime service (4₁,..., 4ₙ), a unique identifier of a configuration item of the runtime service (4₁,..., 4ₙ),
- obtaining (103), based on the unique identifier, a corresponding service host address from a mapping table, by accessing the mapping table, in which a unique identifier of a configuration item of the runtime service (4₁,..., 4ₙ) maps to a corresponding service host address, to obtain the service host address, and
- providing (104), to the runtime service (4₁,..., 4ₙ), the service host address.

6. The method (100) as claimed in claim 5, comprising updating the mapping of the unique identifier to a service endpoint upon configuration items within a service being moved to another service.

7. The method (100) as claimed in claim 5 or 6, wherein the component is an in-process component (34) in a runtime client (2₁,..., 2ₘ), providing an in-process data look-up to the runtime service (4₁,..., 4ₙ).

8. A computer program (420) for a distributed control system (1), the computer program (420) comprising computer code which, when run on processing circuitry (210) of a component (24, 34), causes the component (24, 34) to:
- receive, from the runtime service (4₁,..., 4ₙ), a unique identifier of a configuration item of the runtime service (41,..., 4ₙ),
- obtain, based on the unique identifier, a corresponding service host address from a mapping table, by accessing the mapping table, in which a unique identifier of a configuration item of the runtime service (4₁,..., 4ₙ) maps to a corresponding service host address, to obtain the service host address, and
- provide, to the runtime service (4₁,..., 4ₙ), the service host address.

9. A computer program product (410) comprising a computer program (420) according to claim 8, and a computer readable storage medium (430) on which the computer program (420) is stored.
